# EUROPÄISCHE PATENTSCHRIFT

(11) **EP 1 239 935 B1**
(45) Veröffentlichungstag und Bekanntmachung des Hinweises auf die Patenterteilung: **20.08.2003**
(21) Anmeldenummer: 00988768.8
(22) Anmeldetag: 30.11.2000
(51) Int. Cl.: B01D 19/04, C11D 3/00, C11D 1/34, C11D 1/66, C11D 7/06, C11D 1/72

(54) **ENTSCHÄUMERZUBEREITUNG UND DEREN VERWENDUNG**
ANTI-FOAMING PREPARATION AND USE THEREOF
PREPARATION ANTI-MOUSSE ET SON UTILISATION

(30) Priorität: 09.12.1999 DE 19959311
(43) Veröffentlichungstag der Anmeldung: 18.09.2002
(73) Patentinhaber: Ecolab Inc., St. Paul, MN 55102-1390 (US)
(72) Erfinder: BRAGULLA, Siegfried, 40789 Monheim (DE); SCHWARZ, Peter, 40699 Erkrath (DE)
(74) Vertreter: Godemeyer, Thomas, Dr.
(86) Internationale Anmeldenummer: EP0012020
(87) Internationale Veröffentlichungsnummer: WO01041896

(56) Entgegenhaltungen:
- EP-A- 0 202 638
- EP-A- 0 716 180
- WO-A-91/03538
- WO-A-93/04361
- FR-A- 2 093 790
- GB-A- 2 000 176
- US-A- 3 294 693
- US-A- 3 705 856
- US-A- 4 230 592

## Beschreibung

Die vorliegende Erfindung beschreibt Formulierungen und die Verwendung dieser Formulierungen in hochalkalischen Reinigungsmitteln, insbesondere zur Unterdrückung der Schaumbildung während des Reinigungsprozesses.

Zur Reinigung von Anlagen, Geräten und Behältern in der Lebensmittelindustrie werden vielfach stark alkalische Reinigungslösungen verwendet, um Rückstände, insbesondere Fett- und Eiweißreste, von den Oberflächen der Anlagen und Behälter zu entfernen. Beim sogenannten Cleaning-In-Place-(CIP)-Verfahren, werden üblicherweise Reinigungslösungen im Kreislauf gepumpt und beispielsweise zur effektiven Reinigung von Tanks über Spritzköpfe, die im Tank bereits installiert sind, versprüht. Die Fließgeschwindigkeit liegt dabei durchschnittlich bei 1,5 bis 4 m/sec.
Die bereits verwendeten Reinigungslösungen werden häufig aufgefangen, um sie beim nächsten Reinigungsverfahren wieder verwenden zu können. In diesen gestapelten Reinigungslösungen sammeln sich mehr und mehr gelöste Schmutzrückstände an, die zu zunehmender Schaumbildung führen können. In anderen Fällen enthalten die Reinigungslösungen von vornherein schäumende Bestandteile, wie beispielsweise anionische Tenside. Insbesondere beim Verfahren der CIP-Reinigung wirkt sich Schaum störend aus, so daß man gezwungen ist, die Schaumbildung durch Zusatz schaumdämpfender Formulierungen zu verringern und möglichst zu beseitigen. Die schaumdämpfenden Formulierungen können dabei der verdünnten Reinigungslösung unmittelbar zugesetzt werden, doch wird es in vielen Fällen vorgezogen, die schaumdämpfenden Formulierungen bereits in die Reinigungsmittel einzuarbeiten, aus denen bei der gewerblichen Reinigung die Reinigungslösungen durch Verdünnen mit Wasser hergestellt werden. Hier machen sich jedoch häufig Schwierigkeiten bemerkbar, die aus der Unverträglichkeit der meisten schaumdämpfenden Formulierungen mit hochkonzentrierten Reinigungsmitteln entstehen. Ganz besondere Schwierigkeiten entstehen bei der Einarbeitung von gut entschäumenden Formulierungen in hochalkalische Lösungen, die im wesentlichen aus konzentrierter Alkalilauge bestehen. Für diesen Zweck kommen von vornherein nur wenige Substanzgruppen in Betracht, die eine ausreichende chemische Beständigkeit gegen konzentriertes wäßriges Alkali besitzen, wie beispielsweise alkoxylierte Alkohole. Für sich genommen sind diese schaumdämpfenden Verbindungen in konzentrierten Alkalilaugen nicht klar löslich und nicht homogen einarbeitbar. Erst der Zusatz von Hilfsstoffen, wie Alkylpolyglukosiden und anderen solubilisierend wirkenden Substanzen, wie sie beispielsweise in den Patentanmeldungen EP 202 638 und WO 91/03538 beschrieben sind, hat hier zu einer Verbesserung geführt. Dabei wurden jedoch stets sehr große Mengen an Solubilisierungshilfsmitteln benötigt und die gefundene Lösung war meist nur für einzelne schaumdämpfende Verbindungen dieses Typs wirksam, oder die entschäumende Wirksamkeit des resultierenden Reinigungsmittels war aufgrund der hohen Mengen erforderlicher Hilfsstoffen, wie Alkylpolyglukosiden, nicht mehr ausreichend.
Die vorliegende Erfindung geht auf die Aufgabe zurück, hier eine weitere Verbesserung zu entwickeln. Es sollte eine einfach zusammengesetzte hoch wirksame Entschäumerformulierung gefunden werden, die alle ökologischen und toxikologischen Anforderungen für den Einsatz im Lebensmittelbereich erfüllt und die stabil auch in hochkonzentrierte Alkalilaugen eingearbeitet werden kann.

In der US-A-3,705,856 werden Additive für alkalische Reiniger-Systeme beschrieben, die schwach schäumen und die Korrosion von Kupfer inhibieren. Diese Additive enthalten: a) ein Hydrotrop, b) ein Gemisch von Sequestriermitteln und c) ein Gemisch nichtionischer Tenside. Als Hydrotrop kommen ein Phosphat-Ester, vorzugsweise ein Alkylphenol-polyglykolether-phosphat, als Sequestriermittel ein Gemisch aus Aminotris-(methylen-phosphonsäure und Alkalimetallsalzen von Zuckersäuren und als nichtionische Tenside ein Gemisch aus ethoxylierten und propoxylierten Addukten von Ethylendiamin und alkoxylierten aliphatischen Alkoholen oder Polyoxyethylen-polyoxypropylen-blockcopolymeren in Frage.

Gegenstand der Erfindung sind Entschäumerformulierungen bzw. -zubereitungen, die zur Bereitstellung eines stabilen hochalkalisch-wäßrigen Reinigungsmittels mit einem Anteil von mehr als 20 Gew-% Alkalihydroxid, bezogen auf das Gesamtgewicht des Reinigungsmittels, geeignet sind, wobei die Zubereitung zumindest je eine Substanz ausgewählt aus den Gruppen der
a) Polyhydroxyverbindungen
b) nichtionischen Tenside und
c) Phosphorsäureester und deren Salzen
enthält und der Phosphorsäureester zumindest ein Salz eines Phosphorsäurepartialesters ist, dadurch gekennzeichnet, daß in der Zubereitung aus den Gruppen
a) der Polydroxyverbindungen zumindest ein Alkylpolyglukosid und
b) der nichtionischen Tenside zumindest ein alkoxylierter Alkyl-Alkohol mit 8 bis 22 C-Atomen in der Alkylkette
enthalten sind.

Der Anteil an Alkalihydroxid in dem erhaltenen Reinigungsmittel ist vorzugsweise größer als 25 Gew.-% und insbesondere größer als 40 Gew.-%, jeweils bezogen auf das Gesamtgewicht des Reinigungsmittels. Vorzugsweise bleiben
a) die Reinigungsmittel bei Lagerung über 360 Tage bei Temperaturen von 40 °C und vorzugsweise auch bei -5 °C sowie besonders bevorzugt auch bei 20 °C stabil, ohne zu separieren und sind
b) in der Lage, in 2 Gew.-%iger wäßriger Anwendungslösung , wobei zur Herstellung der Lösung Wasser mit 0 °dH verwendet wurde, bei Zusatz von 3 ml Standardschäumer im Test nach DIN 53902 Teil 1 bei Temperaturen von 60 °C die Schaumhöhe unter 100 mL zu halten.

Der Testablauf sieht vor, daß in einen 1 L-Meßzylinder 200 mL Testlösung bei 60 °C gegeben werden. Die Lösung wird mit 3 mL des Standardschäumers versetzt. Dieser Standardschäumer besteht auf Basis von mit NaOH verseifter Vollmilch. Danach wird durch Schläge mit einer konstanten Frequenz von 60 Schlägen/min., wobei sich der Schlagstempel mit konstanter Geschwindigkeit bewegt und als Schlagfläche eine Lochscheibe verwendet wird, die in der DIN 53902 Teil 1 beschrieben ist, Schaum erzeugt, wobei die Lochscheibe beim Schlagen 4 cm in die Lösung eintaucht.

Wie bereits ausgeführt, enthalten die erfindungsgemäßen Formulierungen bzw. Zubereitungen zumindest je eine Substanz ausgewählt aus den Gruppen der
a) Polyhydroxyverbindungen, worunter sich zumindest ein Alkylpolyglukosid befindet, wobei das Alkylpolyglukosid vorzugsweise 8 bis 14 C-Atome in der Alkylgruppe und 1 bis 5 Glukoseeinheiten hat, und
b) nichtionischen Tenside, worunter sich zumindest ein alkoxylierter Alkylalkohol mit 8 bis 22 Kohlenstoffatomen in der Alkylkette befindet, wobei insbesondere wenigstens eine Verbindung aus den Gruppen der gemischten Ethoxylate/Propoxylate von verzweigten oder unverzweigten Alkylalkoholen mit 8 bis 22 Kohlenstoffatomen in der Alkylkette und der endgruppenverschlossenen Ethoxylate von verzweigten oder unverzweigten Alkylalkoholen mit 8 bis 22 Kohlenstoffatomen in der Alkylkette enthalten ist, und ganz besonders bevorzugt wenigstens eine Verbindung aus den Gruppen ethoxylierter und propoxylierter Alkylalkohole mit 12 bis 22 Kohlenstoffatomen im Alkylteil, der Butylether ethoxylierter Alkylalkohole mit 12 bis 22 Kohlenstoffatomen im Alkyteil und Methylether ethoxylierter Alkylalkohole mit 12 bis 22 Kohlenstoffatomen im Alkylteil enthalten ist, wobei im speziellen Fall Butylether und Methylether des ethoxylierten 2-Octyl-1-dodecanols bevorzugt sind, und
c) Phosphorsäureester und deren Salzen, worunter sich zumindest ein Salz eines Phosphorsäurepartialesters befindet, wobei besonders bevorzugt wenigstens ein Alkalisalz eines Phosphorsäurepartialesters von alkoxyliertem Alkylphenol vorliegt, wobei
die endungsgemäßen Formulierungen vorzugsweise 1 bis 30 Gew.-% und besonders bevorzugt 2 bis 20 Gew.-% von zumindest je einer Substanz ausgewählt aus den beschriebenen Gruppen a) bis c) enthalten und in einer ganz besonders bevorzugten Ausführung die Komponenten (a) : (b) : (c) in einem Gewichtsverhältnis von (1 bis 2) : (2 bis 3) : (1 bis 2) in den erfindungsgemäßen Formulierungen vorliegen.
Vorzugsweise enthalten die erfindungsgemäßen Formulierungen zusätzlich mindestens eine durch ionenselektive Bestimmung erfaßbare Komponente, wobei diese besonders bevorzugt ein Halogenid, insbesondere ein Alkalihalogenid wie beispielsweise Natrium-, Kaliumchlorid oder Natrium-, Kaliumjodid ist und in einer ganz besonders bevorzugten Ausführung die Konzentration der durch ionenselektive Bestimmung erfaßbaren Komponente zwischen 0,01 und 2 Gew.-%, bezogen auf die gesamte Formulierung, liegt.

Die erfindungsgemäßen Formulierungen sowie die daraus erhältlichen hochalkalischen Reinigungsmittel liegen vorzugsweise als wäßrige Lösung vor, wobei in besonders bevorzugter Ausführung auch gel- oder pastenförmige Formulierungen bzw. Reinigungsmittel erhältlich sind.

Die erfindungsgemäßen Formulierungen sind auch in hochkonzentrierten wäßrigen Alkalilaugen in solchen Mengen klar löslich, wie sie zur wirksamen Entschäumung der aus diesen Alkalilaugen hergestellten verdünnten Reinigungslösungen im Lebensmittelbereich benötigt werden. Diese Alkalilöslichkeit ist dabei nicht nur für einzelne schaumdämpfend wirkende Verbindungen gegeben, sondern erstreckt sich auf die gesamte Breite der schaumdämpfend wirkenden alkoxylierten langkettigen Alkohole. Selbstverständlich ist es aber auch möglich, die erfindungsgemäßen Formulierungen nicht mit konzentrierter Alkalihydroxid-Lösung zu vermischen, sondern der auf Anwendungskonzentration verdünnten Reinigungslösung unmittelbar zuzusetzen. Besonders vorteilhaft ist, daß die Gesamtmenge an solubilisierenden Zusatzstoffen in den erfindungsgemäßen Formulierungen verhältnismäßig gering bleiben kann, so daß Störungen der schaumdämpfenden Wirkung durch diese solubilisierenden Zusätze nicht zu beobachten sind.

Die in den erfindungsgemäßen Formulierungen vorzugsweise enthaltenen Alkylpolyglukoside werden durch Kondensation von Fettalkoholen mit Glukose oder Polyglukose großtechnisch hergestellt und sind in verschiedenen Varianten im Handel erhältlich. Beispiele von Alkylpolyglukosiden, die sich für den erfindungsgemäßen Einsatz besonders gut eignen, sind die Produkte Glukopon® 600 der Firma Henkel und Triton® BG10 der Firma Röhm & Haas. Nichtionische Tenside, die zur Herstellung der erfindunggemäßen Formulierungen besondes gut geeignet sind, sind beispielsweise Plurafac® LF 403, Plurafac® 431 der Firma BASF sowie Dehypon® LT 104 und Dehypon® G 2084 der Firma Henkel.

Bei den Phosphorsäureestem handelt es sich um tensidische Substanzen, die sich vorzugsweise von langkettigen aliphatischen oder araliphatischen Alkoholen ableiten. Als besonders geeignet haben sich die Salze der Phosphorsäurepartialester und hier insbesondere die von alkoxylierten Alkylphenolen erwiesen. Vorzugsweise werden als Alkalisalze die Natrium- und Kaliumsalze verwendet, von denen wiederum die Kaliumsalze besonders bevorzugt werden. Tensidisch wirksame Phosphorsäurepartialester, wie sie bevorzugt erfindungsgemäß verwendet werden, sind im Handel erhältlich. Ein Beispiel eines erfindungsgemäß besonders gut brauchbaren Wirkstoffs dieser Art ist das Produkt Triton® H 66 (Röhm & Haas). Die Bestandteile a) und c) liegen vorzugsweise im Gewichtsverhältnis 1 : 1 bis 1 : 10 in den erfindungsgemäßen Formulierungen vor.

Neben den vorstehend beschriebenen Bestandteilen a, b und c enthalten die erfindungsgemäßen Formulierungen im einfachsten Fall nur Wasser. Die Mitverwendung weiterer üblicher Hilfsstoffe für derartige tensidische wäßrige Zubereitung ist aber nicht ausgeschlossen. So können als zusätzliche Lösungsvermittler kurzkettige aromatische Sulfonate, wie beispielsweise Cumolsulfonat, Xylolsutfonat und Toluolsulfonat in Mengen bis zu etwa 5 Gew.-%, vorzugsweise zwischen etwa 0.1 und etwa 2 Gew.-% enthalten sein.

Zur Herstellung der erfindungsgemäßen Formulierungen geht man vorzugsweise wie folgt vor:
Komponente a) wird in Wasser klar gelöst. Danach wird Komponente c) klar gelöst. Als letzte Komponente wird unter weiterem Rühren die Komponente b) klar gelöst. Diese fertige Formulierung kann in Mengen von 0,1 bis 40 Gew.-%, vorzugsweise 1 bis 10 Gew.-%, bezogen auf das gesamte Reinigungsmittel, flüssigen Alkalilösungen mit einem Anteil von vorzugsweise mehr als 20 Gew.-%, besonders bevorzugt mehr als 50 Gew.-% und ganz besonders bevorzugt mehr als 70 Gew.-% Alkalihydroxid, bezogen auf das gesamte Reinigungsmittel, unter Rühren zugefügt werden.

Ein weiterer Gegenstand der Erfindung ist ein Reinigungsmittel auf Basis konzentrierter Alkalilauge, das 1 bis 30 Gew.-% der erfindungsgemäßen Formulierung bzw. Zubereitung, bezogen auf das gesamte Reinigungsmittel, gegebenenfalls zusammen mit weiteren Wirk- und Zusatzstoffen, enthält. Als konzentrierte Alkalilauge wird in diesem Zusammenhang eine Alkalilauge mit 20 bis 80 Gew.-% verstanden, wobei diese Eckwerte für die Erfindung nicht als zwingend anzusehen sind. Den Rest zu 100 Gew.-% stellt Wasser dar.
Vorzugsweise bleiben die erfindungsgemäßen Reinigungsmittel
a) bei Lagerung über 360 Tage bei Temperaturen von 40 °C stabil, ohne zu separieren und sind
b) in der Lage sind, in 2 Gew.-%iger wäßriger Anwendungslösung, wobei zur Herstellung der Lösung Wasser mit 0 °dH verwendet wurde, bei Zusatz von 3 ml Standardschäumer im Test nach DIN 53902 Teil 1 bei Temperaturen von 60 °C die Schaumhöhe unter 100 mL zu halten.

Ein weiterer Gegenstand der vorliegenden Erfindung ist die Verwendung der erfindungsgemäßen Reinigungsmittel in Reinigungsprozessen, die bei Einsatz üblicher Reinigungsmittel aufgrund der sich ansonsten bildenden Schaummengen nicht ohne separaten Zusatz entschäumender Komponenten im Verlauf des Reinigungsprozesses durchführbar wären, ohne daß der Zusatz entschäumender Komponenten im Verlauf des Reinigungsprozesses erforderlich ist. Die erfindungsgemäßen Reinigungsmittel werden vorzugsweise in der Anwendung mit Wasser auf 0,05 bis 6 Gew.-%, bezogen auf die gesamte Reinigungslösung, verdünnt, und besonders bevorzugt in Reinigungsprozessen in der Lebensmittelindustrie, insbesondere in der Getränkeindustrie zur Flaschenreinigung oder in der Milchindustrie zur CIP-Reinigung sowie in der pharmazeutischen oder kosmetischen Industrie eingesetzt. In besonders bevorzugter Ausführung der erfindungsgemäßen Verwendung kann während der Reinigungsprozesse vollständig auf den Zusatz zusätzlicher Entschäumer verzichtet werden.

Die Verwendung der erfindungsgemäßen Formulierung bzw. Entschäumerzubereitung kann entweder in der Weise erfolgen, daß die erfinderische Formulierung der auf Anwendungskonzentration eingestellten Reinigungslösung unmittelbar zugesetzt wird, oder aber mit besonderem Vorteil in der Weise, daß die erfindungsgemäße Formulierung in das Konzentrat, also das Reinigungsmittel, eingearbeitet wird, aus dem später erst die anzuwendende Reinigungslösung durch Verdünnung mit Wasser hergestellt wird.

Im einfachsten Fall enthalten die aus den erfindungsgemäßen Formulierungen erhältlichen Reinigungsmittel neben Alkalihydroxid und den übrigen Bestandteilen der erfindungsgemäßen Formulierungen lediglich Wasser. In den meisten Fällen sind daneben aber weitere Wirkstoffe wie Komplexbildner, wie beispielsweise Salze von Organophosphonsäuren, etwa Nitrilotrimethylenphosphonsäure, Salze von Aminoessigsäuren, wie etwa Methylglycindiessigsäure oder Salze von Hydroxycarbonsäuren, insbesondere von Zitronensäure und/oder Milchsäure, sowie Polycarbonsäuren oder deren Salze, wie beispielsweise Polyacrylate oder Polyasparaginsäure enthalten. Derartige Komplexbildner können in den Reinigungsmitteln in Mengen bis zu etwa 20 Gew.-%, vorzugsweise in Mengen zwischen etwa 1 und etwa 10 Gew.-% enthalten sein. Weitere falkultative Bestandteile derartiger im Lebensmittelbereich eingesetzter alkalischer Reinigerkonzentrate sind Gluconsäure oder Phosphonobutantricarbonsäure in Mengen von 1 bis 5 %.

Der Vorteil der erfindungsgemäßen Formulierungen und Verfahren besteht darin, daß in konzentrierten Alkalilaugen klar lösliche, homogen einarbeitbare und über einen langen Zeitraum stabile Mischungen mit sehr gutem entschäumenden Profil verfügbar gemacht werden, ohne daß zu große Mengen an Hilfsstoffen, wie Alkylpolyglukosiden und anderen solubilisierend wirkenden Substanzen, wie sie beispielsweise in den Patentanmeldungen EP 202 638 und WO 91/03538 beschrieben sind, nötig sind.

### Beispiele

Beispiele für erfindungsgemäße Formulierungen sind in Tabelle 1 als Beispiel 1 und Beispiel 2 enthalten.

**Tabelle 1:**

| Beispiele für erfindungsgemäße Formulierungen: | | |
|---|---|---|
| **Bestandteile** | **Beispiel 1** | **Beispiel 2** |
| Alkylpolyglukosid (Triton® BG 10) | 4,2 % | 4,2 % |
| C₁₂-C₁₈-Fettalkohol + EO + PO (Plurafac® LF 403) | 5,0 % | 6,0 % |
| Alkylarylalkoxyphosphat-Kaliumsalz (50 %) (Triton® H 66) | 3,55 % | 3,5 % |
| Wasser | 87,25 % | 86,3 % |
| Insgesamt | 100,0 % | 100,0 % |

### Zur Herstellung wurde folgendermaßen vorgegangen:

Das Wasser wurde in einem Rührbehälter vorgelegt. Danach wurden Triton BG 10, Triton H 66 und als letztes Plurafac LF 403 unter langsamen Rühren vollständig gelöst.

Durch Mischen von erfindungsgemäßen Formulierungen oder deren Bestandteilen mit Alkalilauge können stabile hochalkalische Reinigungsmittel erhalten werden. Beispiele für derartige Mischungen sind in Tabelle 2 als Beispiel 3 und Beispiel 4 enthalten.
Die Mischungen der Beispiele 1 und 2 wurden zu je 10 Gew.-% mit 90 Gew.-% 50%iger NaOH langsam unter Rühren gemischt, bis eine homogene Mischung entstand.
Mit den erfinderischen Mischungen gemäß den Beispielen 3 und 4 sowie den Vergleichsbeispielen 1, 2, 3, 4 und 5 wurden Versuche zur Bestimmung der entschäumenden Eigenschaften durchgeführt

Der Versuch wurde bei 60 °C mit einer 2 %igen Lösung der Formulierungen gemäß den Beispielen 3 und 4 und den Vergleichsbeispielen 1, 2, 3, 4 und 5 in enthärtetem Wasser im Test nach DIN 53902 Teil 1 bei 60 °C unter Zusatz von 2 mL einer schäumenden Verunreinigung durchgeführt. Als schäumende Verunreinigung wurde verseifte Vollmilch verwendet. Je niedriger das entstehende Schaumvolumen ist, desto besser ist die entschäumende Wirksamkeit des Entschäumers. Die Ergebnisse dieser Versuchsserie sind in Tabelle 2 enthalten.
Neben den Versuchen zur Ermittlung der entschäumenden Eigenschaften wurde auch die Stabilität der hochalkalischen Formulierungen untersucht. Hierfür wurden die den Beispielen 3, 4 und den Vergleichsbeispielen 1, 2, 3, 4 und 5 6 entsprechenden Mischungen bei -5 °C, 20 °C und 40 °C in verschlossenen Glasbehältern gelagert und wöchentlich geprüft, ob visuelle Veränderungen der Mischungen erkennbar sind. Die Ergebnisse dieser Versuchsserie sind ebenfalls in Tabelle 2 enthalten.

**Tabelle 2:**

| Beispiele für die entschäumende Wirksamkeit hochalkalischer Reinigungsmittel: | | | | | | | |
|---|---|---|---|---|---|---|---|
| **Bestandteile** | **B. 3*** (%) | **B. 4*** (%) | **V. 1**** (%) | **V. 2**** (%) | **V. 3**** (%) | **V. 4**** (%) | **V. 5**** (%) |
| Alkylpolyglukosid (Triton® BG 10) | 0,42 | 0,42 | 0,50 | 0,42 | 0 | 0,55 | 0,42 |
| C₁₂-C₁₈-Fettalkohol + EO + PO (Plurafac® LF 403) | 0,50 | 0,60 | 0 | 0,45 | 0 | 0,30 | 0,60 |
| Alkylarylalkoxyphosphat-Kaliumsalz (50 %) (Triton® H 66) | 0,36 | 0,35 | 0 | 0 | 0 | 0 | 0 |
| NaOH | 45 | 45 | 45 | 45 | 45 | 45 | 45 |
| Wasser | 53,72 | 53,63 | 54,2 | 54,13 | 55 | 54,15 | 53,98 |
| Insgesamt | 100,0 | 100,0 | 100,0 | 100,0 | 100,0 | 100,0 | 100,0 |

| **Entschäumende Wirksamkeit** | | | | | | | |
|---|---|---|---|---|---|---|---|
| Schaumhöhe im Schaumtest | 90 | 80 | 280 | 140 | 350 | 420 | 180 |

| **Stabilitätsprüfung***** | | | | | | | |
|---|---|---|---|---|---|---|---|
| Bei -5°C | >50w | >50w | >50w | 20w | >50w | >50w | 10w |
| Bei 20°C | >50w | >50w | >50w | 20w | >50w | >50w | 2w |
| Bei 40°C | >50w | >50w | >50w | 10w | >50w | >50w | 1w |

| | | | | | | | |
|---|---|---|---|---|---|---|---|
| * B = Abkürzung für erfindungsgemäße Beispiele | | | | | | | |
| ** V = Abkürzung für Vergleichsbeispiele | | | | | | | |
| *** w = Abkürzung für Wochen | | | | | | | |

## Patentansprüche

1. Entschäumeizubereitung, die zur Bereitstellung eines stabilen hochalkalisch-wäßrigen Reinigungsmittels mit einem Anteil von mehr als 20 Gew.-% Alkalihydroxid, bezogen auf das Gesamtgewicht des Reinigungsmittels, geeignet ist, wobei die Zubereitung zumindest je eine Substanz ausgewählt aus den Gruppen der
a) Polyhydroxyverbindungen
b) nichtionischen Tenside und
c) Phosphorsäureester und deren Salzen
enthält und der Phosphorsäurester zumindest ein Salz eines Phosphorsäurepartialester ist, **dadurch gekennzeichnet, daß** in der Zubereitung aus den Gruppen
a) der Polyhydroxyverbindungen zumindest ein Alkylpolyglukosid und
b) der nichtionischen Tenside zumindest ein alkoxylierter Alkyl-Alkohol mit 8 bis 22 C-Atomen in der Alkylkette enthalten sind.

2. Zubereitung nach Anspruch 1, **dadurch gekennzeichnet, daß** der Anteil an Alkalihydroxid in dem erhaltenen Reinigungsmittel größer als 25 Gew.-%, bezogen auf das Gesamtgewicht der Reinigungsmittel, ist.

3. Zubereitung nach Anspruch 2, **dadurch gekennzeichnet, daß** der Anteil an Alkalihydroxid in den erhaltenen Reinigungsmitteln größer als 40 Gew.-%, bezogen auf das Gesamtgewicht der Reinigungsmittel, ist

4. Zubereitung nach einem der Ansprüche 1 bis 3, **dadurch gekennzeichnet, daß** der Bestandteil c) wenigstens ein Alkalisalz eines Phosphorsäurepartialesters von alkoxyliertem Alkylphenol ist.

5. Zubereitung nach einem der Ansprüche 1 bis 4, **dadurch gekennzeichnet, daß** der Bestandteil b) wenigstens eine Verbindung aus der Gruppe der gemischten Ethoxylate/Propoxylate von verzweigten oder unverzweigten Alkyl-Alkoholen mit 8 bis 22 C-Atomen in der Alkylkette und der endgruppenverschlossenen Ethoxylate von verzweigten oder unverzweigten Alkyl-Alkoholen mit 8 bis 22 C-Atomen in der Alkylkette ist.

6. Zubereitung nach Anspruch 5, **dadurch gekennzeichnet, daß** der Bestandteil b) wenigstens eine Verbindung aus der Gruppe ethoxylierter und propoxylierter Alkyl-Alkohole mit 12 bis 22 C-Atomen im Alkylteil, Butylether eines ethoxylierten Alkyl-Alkohols mit 12 bis 22 C-Atomen im Alkylteil und Methylether eines ethoxylierten Alkyl-Alkohols mit 12 bis 22 C-Atomen im Alkylteil darstellt.

7. Zubereitung nach einem der Ansprüche 1 bis 6, **dadurch gekennzeichnet, daß** die Komponente a) wenigstens ein Alkylpolyglukosid mit 8 bis 14 C-Atomen in der Alkylgruppe und 1 bis 5 Glukoseeinheiten ist.

8. Zubereitung nach einem der Ansprüche 1 bis 7, **dadurch gekennzeichnet, daß**, bezogen auf die gesamte Zubereitung die Bestandteile,
a) mit 1 bis 30 Gew.-% und
b) mit 1 bis 30 Gew.-% und
c) mit 1 bis 30 Gew.-%
enthalten sind.

9. Zubereitungen nach Anspruch 8, **dadurch gekennzeichnet, daß**, bezogen auf die gesamte Zubereitung die Bestandteile,
a) mit 2 bis 20 Gew.-% und
b) mit 2 bis 20 Gew.-% und
c) mit 2 bis 20 Gew.-%
enthalten sind.

10. Zubereitung nach einem der Ansprüche 1 bis 9, **dadurch gekennzeichnet, daß** die Bestandteile (a) : (b) : (c) ) in einem Gewichtsverhältnis (1 bis 2) : (2 bis 3) : (1 bis 2) vorliegen.

11. Zubereitung nach einem der Ansprüche 1 bis 10, **dadurch gekennzeichnet, daß** zusätzlich mindestens eine durch ionenselektive Bestimmung erfaßbare Komponente enthalten ist.

12. Zubereitung nach Anspruch 11, **dadurch gekennzeichnet, daß** die durch ionenselektive Bestimmung erfaßbare Komponente ein Halogenid ist.

13. Zubereitung nach einem der Ansprüche 11 und 12, **dadurch gekennzeichnet, daß** die durch ionenselektive Bestimmung erfaßbare Komponente in einer Konzentration von 0,01 bis 2 Gew.-%, bezogen auf die gesamte Zubereitung, vorliegt.

14. Reinigungsmittel das, bezogen auf das gesamte Reinigungsmittel,
a) 1 bis 30 Gew.-% einer Zubereitung gemäß einem der Ansprüche 1 bis 13 und
b) 20 bis 80 Gew. % Alkalihydroxid
gegebenenfalls zusammen mit weiteren Wirk- und Zusatzstoffen enthält.

15. Verwendung eines Reinigungsmittels gemäß Anspruch 14 in Reinigungsvorgängen mit störendem Schaumaufkommen.

16. Verwendung nach Anspruch 15, **dadurch gekennzeichnet, daß** das Reinigungsmittel in der Anwendung auf 0,05 bis 6 Gew.-%, bezogen auf die gesamte Reinigungslösung, verdünnt wird.

17. Verwendung nach einem der Ansprüche 15 oder 16, **dadurch gekennzeichnet, daß** das Reinigungsmittel in Reinigungsprozessen in der Lebensmittelindustrie eingesetzt wird.

18. Verwendung nach Anspruch 17, **dadurch gekennzeichnet, daß** das Reinigungsmittel in der Lebensmittelindustrie zur Flaschenreinigung eingesetzt wird.

19. Verwendung nach Anspruch 17, **dadurch gekennzeichnet, daß** das Reinigungsmittel in der Lebensmittelindustrie zur CIP-Reinigung eingesetzt wird.

20. Verwendung nach einem der Ansprüche 15 oder 16, **dadurch gekennzeichnet, daß** das Reinigungsmittel in Reinigungsprozessen in der pharmazeutischen oder kosmetischen Industrie eingesetzt wird.

21. Verwendung nach einem der Ansprüche 15 bis 20, **dadurch gekennzeichnet, daß** während des Reinigungsprozesses keine zusätzlichen Entschäumer zugesetzt werden.

## Claims

1. A defoamer preparation suitable for preparing a stable, highly alkaline water-containing cleaner containing more than 20% by weight alkali metal hydroxide, based on the total weight of the cleaner, the preparation containing at least one substance from each of the following groups:
a) polyhydroxy compounds,
b) nonionic surfactants and
c) phosphoric acid esters and salts thereof
and the phosphoric acid ester being at least one salt of a phosphoric acid partial ester, **characterized in that** the preparation contains
a) from the group of polyhydroxy compounds, at least one alkyl polyglucoside and
b) from the group of nonionic surfactants, at least one alkoxylated alkyl alcohol containing 8 to 22 carbon atoms in the alkyl chain

2. A preparation as claimed in claim 1, **characterized in that** the percentage content of alkali metal hydroxide in the cleaner obtained is greater than 25% by weight, based on the total weight of the cleaner.

3. A preparation as claimed in claim 2, **characterized in that** the percentage content of alkali metal hydroxide in the cleaners obtained is greater than 40% by weight, based on the total weight of the cleaner.

4. A preparation as claimed in any of claims 1 to 3, **characterized in that** component c) is at least one alkali metal salt of a phosphoric acid partial ester of alkoxylated alkylphenol.

5. A preparation as claimed in any of claims 1 to 4, **characterized in that** component b) is at least one compound from the group of mixed ethoxylates/propoxylates of branched or unbranched alkyl alcohols containing 8 to 22 carbon atoms in the alkyl chain and end-capped ethoxylates of branched or unbranched alkyl alcohols containing 8 to 22 carbon atoms in the alkyl chain.

6. A preparation as claimed in claim 5, **characterized in that** component b) is at least one compound from the group of ethoxylated and propoxylated alkyl alcohols containing 12 to 22 carbon atoms in the alkyl moiety, butyl ethers of an ethoxylated alkyl alcohol containing 12 to 22 carbon atoms in the alkyl moiety and methyl ethers of an ethoxylated alkyl alcohol containing 12 to 22 carbon atoms in the alkyl moiety.

7. A preparation as claimed in any of claims 1 to 6, **characterized in that** component a) is at least one alkyl polyglucoside containing 8 to 14 carbon atoms in the alkyl group and 1 to 5 glucose units.

8. A preparation as claimed in any of claims 1 to 7, **characterized in that** components a), b) and c) are each present in quantities of 1 to 30% by weight, based on the preparation as a whole.

9. A preparation as claimed in claim 8, **characterized in that** components a), b) and c) are each present in quantities of 2 to 20% by weight, based on the preparation as a whole.

10. A preparation as claimed in any of claims 1 to 9, **characterized in that** components (a), (b) and (c) are present in a ratio by weight of (1 to 2):(2 to 3):(1 to 2).

11. A preparation as claimed in any of claims 1 to 10, **characterized in that** at least one component detectable by ion-selective determination is additionally present.

12. A preparation as claimed in claim 11, **characterized in that** the component detectable by ion-selective determination is a halide.

13. A preparation as claimed in claim 11 or 12, **characterized in that** the component detectable by ion-selective determination is present in a concentration of 0.01 to 2% by weight, based on the preparation as a whole.

14. A cleaner containing - based on the cleaner as a whole-
a) 1 to 30% by weight of the preparation claimed in any of claims 1 to 13 and
b) 20 to 80% by weight of alkali metal hydroxide,
optionally together with other active substances and additives.

15. The use of the cleaner claimed in claim 14 in cleaning processes involving troublesome foaming.

16. The use claimed in claim 15, **characterized in that**, before use, the cleaner is diluted to 0.05 to 6% by weight, based on the cleaning solution as a whole.

17. The use claimed in claim 15 or 16, **characterized in that** the cleaner is used in cleaning processes in the food industry.

18. The use claimed in claim 17, **characterized in that** the cleaner is used for cleaning bottles in the food industry.

19. The use claimed in claim 17, **characterized in that** the cleaner is used for CIP cleaning in the food industry.

20. The use claimed in claim 15 or 16, **characterized in that** the cleaner is used in cleaning processes in the pharmaceutical or cosmetic industry.

21. The use claimed in any of claims 15 to 20, **characterized in that** no additional defoamer is added during the cleaning process.

## Revendications

1. Préparation d'antimousse qui convient pour la mise à disposition d'un produit de nettoyage stable, aqueux hautement alcalin, ayant une proportion de plus de 20 % en poids d'hydroxyde de métal alcalin, rapporté au poids total de produit de nettoyage, et contenant au moins une substance choisie dans les groupes des :
a) composés polyhydroxylés,
b) agents tensioactifs non ioniques, et
c) esters d'acide phosphorique et leurs sels,
dans laquelle l'ester d'acide phosphorique étant au moins sous forme d'un sel d'un ester partiel d'acide phosphorique,
**caractérisée en ce que**
dans la préparation choisie dans les groupes :
a) des composés polyhydroxylés, au moins un alkylpolyglycoside est contenu,
b) des agents tensioactifs non ioniques, au moins un alkyl-alcool alkoxylé ayant de 8 à 22 atomes de carbone dans la chaîne alkyle, est contenu.

2. Préparation selon la revendication 1,
**caractérisée en ce que**
la proportion d'hydroxyde de métal alcalin dans le produit de nettoyage obtenu, est plus grande que 25 % en poids rapporté au poids total de produit de nettoyage.

3. Préparation selon la revendication 2,
**caractérisée en ce que**
la proportion d'hydroxyde de métal alcalin dans le produit de nettoyage obtenu, est plus grande que 40 %, rapporté au poids total de produit de nettoyage.

4. Préparation selon l'une quelconque des revendications 1 à 3,
**caractérisée en ce que**
le constituant c) est au moins un sel de métal alcalin d'un ester partiel d'acide phosphorique d'un alkylphénol alkoxylé.

5. Préparation selon l'une quelconque des revendications 1 à 4,
**caractérisée en ce que**
le constituant b) est au moins un composé choisi dans le groupe des éthoxylates/propoxylates mixtes des alkyl-alcools ramifiés ou non ramifiés avec de 8 à 22 atomes de carbone dans la chaîne alkyle et des éthoxylates dont le groupe terminal est bloqué, alkyl-alcools ramifiés ou non ramifiés ayant de 8 à 22 atomes de carbone.

6. Préparation selon la revendication 5,
**caractérisée en ce que**
le constituant b) représente au moins un composé choisi dans le groupe des alkyl-alcools éthoxylés et propoxylés ayant de 12 à 22 atomes de carbone dans la partie alkyle, un butyleéther d'un alkyl-alcool éthoxylé ayant de 12 à 22 atomes de carbone dans la partie alkyle, et un méthyléther d'un alkyl-alcool éthoxylé ayant de 12 à 22 atomes de carbone dans la partie alkyle.

7. Préparation selon l'une quelconque des revendications 1 à 6,
**caractérisée en ce que**
le composant a) est au moins un alkylpolyglucoside ayant 8 à 14 atomes de carbone dans le groupe alkyle et 1 à 5 éléments de glucose.

8. Préparation selon l'une quelconque des revendications 1 à 7,
**caractérisée en ce que**
rapporté à la préparation totale, les composants sont présents
(a) avec 1 à 30 % en poids,
(b) avec 1 à 30 % en poids,
(c) avec 1 à 30 % en poids.

9. Préparation selon la revendication 8,
**caractérisée en ce qu'**
elle contient rapporté à la préparation totale, les composants
(a) pour 2 à 20 % en poids,
(b) pour 2 à 20 % en poids,
(c) pour 2 à 20 % en poids.

10. Préparation selon l'une quelconque des revendications 1 à 9,
**caractérisée en ce que**
les constituants (a): (b): (c) se présentent dans un rapport en poids de (1 à 2):, (2 à 3): (1 à 2).

11. Préparation selon l'une quelconque des revendications 1 à 10,
**caractérisée en ce qu'**
en supplément au moins un composant enregistrable par détermination sélective pour les ions, est présent.

12. Préparation selon la revendication 11,
**caractérisée en ce que**
le composant enregistrable par détermination sélective pour les ions, est un halogénure.

13. Préparation selon l'une quelconque des revendications 11 à 12,
**caractérisée en ce que**
le composant enregistrable par détermination sélective pour les ions se présente à une concentration de 0,01 à 2 % en poids rapporté à la préparation totale.

14. Produit de nettoyage qui, rapporté au produit de nettoyage total contient :
a) de 1 à 30 % en poids d'une préparation conformément à l'une des revendications 1 à 13, et
b) de 20 à 80 % en poids d'un hydroxyde de métal alcalin,
le cas échéant conjointement à d'autres principes actifs et additifs.

15. Utilisation d'un produit de nettoyage conformément à la revendication 14, dans des processus de nettoyage avec des arrivées de mousse gênantes.

16. Utilisation selon la revendication 15,
**caractérisée en ce que**
le produit de nettoyage est dilué dans l'utilisation de 0,05 à 6 % en poids rapporté à la solution totale de nettoyage.

17. Utilisation selon l'une quelconque des revendications 15 ou 16,
**caractérisée en ce que**
le produit de nettoyage dans les processus de nettoyage est mis en oeuvre dans l'industrie alimentaire.

18. Utilisation selon la revendication 17,
**caractérisée en ce que**
le produit de nettoyage est mis en oeuvre dans l'industrie alimentaire, pour le lavage des bouteilles.

19. Utilisation selon la revendication 17,
**caractérisée en ce que**
le produit de nettoyage dans l'industrie alimentaire est mis en oeuvre pour le lavage CIP (Procédé Cleaning - In - Place).

20. Utilisation selon l'une quelconque des revendications 15 ou 16,
**caractérisée en ce que**
le produit de nettoyage dans des processus de nettoyage est mis en oeuvre dans l'industrie pharmaceutique ou l'industrie cosmétique.

21. Utilisation selon l'une quelconque des revendications 15 à 20,
**caractérisée en ce que**
pendant le processus de nettoyage on n'ajoute aucun agent antimousse supplémentaire.
